**Europäisches Patentamt**

**European Patent Office**

**Office européen des brevets**

(19)

(11) Numéro de publication: **0 175 605**
**B1**

(12) # FASCICULE DE BREVET EUROPEEN

(45) Date de publication du fascicule du brevet:
**20.04.88**

(21) Numéro de dépôt: **85401641.7**

(22) Date de dépôt: **13.08.85**

(51) Int. Cl.⁴: **C 10 G 65/04,** B 01 J 23/88,
B 01 J 23/28, B 01 J 23/24

(54) Procédé d'hydrotraitement de charges d'hydrocarbures et catalyseur pour la mise ein oeuvre de ce procédé.

(30) Priorité: **14.09.84 FR 8414109**

(43) Date de publication de la demande:
**26.03.86 Bulletin 86/13**

(45) Mention de la délivrance du brevet:
**20.04.88 Bulletin 88/16**

(84) Etats contractants désignés:
**BE DE GB IT NL**

(56) Documents cités:
**EP - A - 0 122 180**
**FR - A - 2 202 931**
**FR - A - 2 357 635**
**FR - A - 2 361 154**
**FR - A - 2 440 225**
**US - A - 2 952 644**
**US - A - 4 024 231**
**US - A - 4 111 796**

(73) Titulaire: **COMPAGNIE DE RAFFINAGE ET DE DISTRIBUTION TOTAL FRANCE, 84, rue de Villiers, F-92300 Levallois Perret (FR)**

(72) Inventeur: **Devanneaux, Jacques, 5, rue du Dauphiné, F-76290 Montivilliers (FR)**
Inventeur: **Gallez, Jean-Paul, Sente aux Prêtres-Parc d'Anxtot, F-76210 Bolbec (FR)**
Inventeur: **Mariette, Laurent, 16, Quai Montival Touques, F-14800 Deauville (FR)**

(74) Mandataire: **Jolly, Jean-Pierre et al, Cabinet BROT et JOLLY 83, rue d'Amsterdam, F-75008 Paris (FR)**

ACTORUM AG

## Description

La présente invention concerne un procédé d'hydrotraitement et, plus particulièrement, d'hydrodémétallisation de charges d'hydrocarbures. Elle concerne également un catalyseur d'hydrotraitement utilisable pour la mise en oeuvre de ce procédé.

Les charges lourdes d'hydrocarbures, telles que les pétroles bruts, les résidus de distillation desdits pétroles bruts ou les charges provenant du charbon, par example, contiennent des composés organométalliques, notamment de nickel et de vanadium. Ces metaux sont des poisons des catalyseurs utilisés dans les procédés de traitement catalytique de ces charges, tels que les procédés d'hydrodésulfuration ou de craquage catalytique.

Préalablement à ces traitements catalytiques, il convient donc de faire subir à ces charges un hydrotraitement, en vue, notamment, de les démétalliser aussi complètement que possible.

Pour réaliser cette démétallisation, on a proposé d'utiliser de la bauxite (voir brevet US 2.687.985), de l'alumine (voir brevets US 3.901.792 et FR 2.357.635).

On a également proposé d'utiliser de l'alumine, sur laquelle est déposé au moins un métal des Groupes VI et VIII de la classification périodique des éléments.

Ainsi, le brevet français n° 2.400.953 décrit un catalyseur de démétallisation contenent de 0,5 à 3% et, de préférence, de 1 à 2% en poids d'oxyde de molybdène déposé sur une alumine macroporeuse. Le métal est nécessaire pour obtenir une activité démétallisante optimale. En effet, en l'absence du métal sur l'alumine, la période de mise en régime est trop longue (la période de mise en régime est le temps qui s'écoule entre l'introduction de la charge et l'obtention de l'activité démétallisante optimale).

Au cours de ses recherches sur les catalyseurs de démétallisation de charges d'hydrocarbures, la Demanderesse a découvert que des alumines mésoporeuses, activées à l'aide d'un composé soufré et ayant des caractéristiques particulières, sont de très bons catalyseurs de démétallisation. On entend par alumine mésoporeuse une alumine ayant une porosité intermédiaire entre une alumine microporeuse et une alumine macroporeuse; dans le cas de la présente description, le volume poreux constitué par des pores de rayon au moins égal à $1000.10^{-8}$ cm est inférieur à 10%.

Ces catalyseurs et leur utilisation dans un procédé d'hydrotraitement de charges d'hydrocarbures sont décrits dans EP-A- 122 180. Dans le cas de certaines charges d'hydrocarbures, l'activité démétallisante optimale est obtenue assez rapidement avec ces alumines, activées à l'aide d'un composé soufré. C'est le cas de charges contenant une quantité suffisante de métaux contaminants (vanadium + nickel), qui autocatalysent la réaction de démétallisation. Il en est ainsi pour l'huile obtenue par désasphaltage au solvant lourd d'un résidu de la distillation sous pression atmosphérique d'un pétrole brut d'origine «BOSCAN». Pour d'autres charges contenant moins de métaux contaminants, comme le résidu de la distillation sous pression réduite d'un résidu de distillation sous pression atmosphérique d'un pétrole brut d'origine «KIRKOUK», l'activité démétallisante optimale est plus longue à obtenir, ce qui est difficilement acceptable au point de vue industriel. Pour les produits cités ci-dessus, le temps nécessaire est trois fois plus important pour le produit d'origine KIRKOUK que pour le produit d'origine BOSCAN, ceci étant en accord avec les teneurs respectives en métaux de ces charges (respectivement environ 150 et 450 ppm).

La Demanderesse a établi qu'en incorporant dans l'alumine mésoporeuse, objet de EP-A- 122 180, de faibles quantités d'au moins un métal, dans des proportions notablement inférieures à celles incorporées dans l'alumine macroporeuse du brevet français n° 2.400.953, il est possible, après sulfuration du produit obtenu, d'obtenir de bons catalyseurs de démétallisation, ayant une activité initiale démétallisante optimale.

Le but de la présente invention est donc d'obtenir la démétallisation efficace de charges d'hydrocarbures, avec une période de mise en régime très courte de l'alumine.

A cet effet, l'invention a pour objet un procédé d'hydrotraitement et, notamment, d'hydrodémétallisation d'une charge d'hydrocarbures, consistant, dans des conditions usuelles d'hydrotraitement, à mettre ladite charge en contact avec un catalyseur comprenant un support minéral réfractaire, composé essentiellement par une alumine dont les caractéristiques sont les suivantes:
– surface spécifique: supérieure à 150 $m^2/g$ et, de préférence, à 175 $m^2/g$,
– volume poreux: supérieur à 0,6 $cm^3/g$ et, de préférence, à 0,7 $cm^3/g$,
– distribution du volume poreux en fonction du rayon de pore: au moins 50% de pores de rayon au plus égal à $100.10^{-8}$ cm, et moins de 10% de pores de rayon supérieur ou égal à $1000.10^{-8}$ cm,
– mode de distribution des rayons de pores en cm (maximum de la courbe de distribution des rayons de pores): rayons compris entre 40 et $70.10^{-8}$ cm,
ledit catalyseur ayant été sulfuré préalablement à la mise en oeuvre dudit procédé et étant éventuellement sulfuré pendant ledit procédé,
ledit procédé étant caractérisé en ce que ledit catalyseur contient, sous forme libre ou combinée, outre le support, rapporté au poids total du catalyseur, de 0,01 à 0,7% en poids, calculé en élément, de molybdène.

Dans cet objet de l'invention et dans la suite de la présente déscription, il est entendu que le volume poreux constitué par des pores de rayon inférieur ou égal à $100.10^{-8}$ cm est mesuré à l'azote par la méthode B.E.T. et celui constitué par des pores de rayon supérieur à $100.10^{-8}$ cm (et, par conséquent, celui constitué par des pores de rayon supérieur ou égal à $100.10^{-8}$ cm) au porosimètre à mercure.

L'invention a également pour object un catalyseur d'hydrotraitement de charges d'hydrocarbures utilisable dans le procéde d'hydrotraitement qui vient d'être défini, ledit catalyseur comprenant un support minéral réfractaire composé essentiellement par une alumine dont les caractéristiques sont les suivantes:

– surface spécifique: supérieure à 150 m²/g et, de préférence, à 175 m²/g,

– volume poreux: supérieur à 0,6 cm³/g et, de préférence, à 0,7 cm³/g,

– distribution du volume poreux en fonction du rayon de pore: au moins 50% de pores de rayon au plus égal à 100.10⁻⁸ cm, et moins de 10% de pores de rayon supérieur ou égal à 1000.10⁻⁸ cm,

– mode de distribution des rayons de pores en cm (maximum de la courbe de distribution des rayons de pores): rayons compris entre 40 et 70.10⁻⁸ cm, ledit catalyseur ayant été sulfuré préalablement à la mise en œuvre dudit procédé et étant éventuellement sulfuré pendant ledit procédé, ledit catalyseur étant caractérisé en ce qu'il contient, sous forme libre ou combinée, outre le support, rapporté au poids total du catalyseur, de 0,01 à 0,7% en poids, calculé en élément, de molybdène.

Dans le procédé d'hydrotraitement selon l'invention, le catalyseur est dans tous les cas sulfuré préalablement à la mise en oeuvre dudit procédé et, eventuellement, pendant ce prodcédé. La sulfuration du catalyseur consiste à transformer les métaux qu'il contient en sulfures, suivant des procédés bien connus de l'homme de l'art.

La sulfuration peut être effectuée en mettant en contact le catalyseur avec de l'hydrogène sulfuré.

Celui-ci peut:

a. soit provenir d'une source extérieure,

b. soit provenir d'une réaction de désulfuration de la charge, effectuée en combinaison avec l'hydrotraitement,

c. soit être engendré in situ, par décomposition d'un composé soufré ajouté à la charge, par exemple par décomposition de diméthyldisulfure,

d. soit être engendré in situ, par décomposition d'autres composés soufrés présents dans la charge.

Dans le cas b., le catalyseur utilisé peut être employé en combinaison avec un catalyseur de désulfuration classique, tel que ceux comprenant un support réfractaire à base d'alumine, sur lequel ont été déposés des composés des métaux des Groupes VI et VIII des éléments de la classification périodique.

Si le catalyseur d'hydrotraitement selon l'invention est chargé dans un premier réacteur d'un train de plusieurs réacteurs, dont les autres réacteurs contiennent un catalyseur d'hydrodésulfuration (le rôle du premier réacteur étant d'éliminer les métaux de la charge et d'empêcher l'empoisonnement du catalyseur d'hydrodésulfuration), au moins une fraction du gaz issu du train de réacteurs, riche en hydrogène sulfuré, peut être recyclée vers l'entrée du premier réacteur, afin d'activer le catalyseur selon l'invention, pendant toute ou partie de la durée du cycle de l'hydrotraitement.

La façon préférée de mettre en œuvre le procédé, parce que la plus simple, est celle où la sulfuration du catalyseur est effectuée par mise en contact avec de l'hydrogène sulfuré engendré in situ par décomposition de composés soufrés présents dans la charge. La Demanderesse a en effet découvert que la quantité d'hydrogène sulfuré nécessaire pour amorcer la réaction d'hydrotraitement est faible. Elle a par la suite établi qu'il est possible d'engendrer l'hydrogène sulfuré nécessaire à l'activation du catalyseur in situ, à partir des composés soufrés présents dans la charge, en utilisant le pouvoir infime, mais suffisant, de désulfuration du catalyseur.

Le catalyseur selon l'invention peut être utilisé pour l'hydrodémétallisation d'une charge d'hydrocarbures.

La Demanderesse attribue les propriétés démétallisantes du catalyseur au fait que, dans la période de mise en régime, il se dépose sur le catalyseur des sulfures, principalement de vanadium, qui sont des phases actives.

Les catalyseurs selon l'invention, contiennent, outre le support, sous forme libre ou combinée, rapporté au poids total du catalyseur, de 0,01 à 0,7% en poids, calculé en élément, de molybdène.

La teneur en molybdène est de préférence comprise entre 0,2 et 0,6% en poids.

Outre le molybdène, le catalyseur peut contenir de 0,01 à 0,7% en poids de nickel ou de vanadium.

Le support est composé essentiellement d'alumine, mais il peut contenir, outre l'alumine, un ou plusieurs autres oxydes minéraux réfractaires comme la silice, dans une quantité qui peut aller jusqu'à environ 30% en poids du support.

Les catalyseurs selon l'invention peuvent être préparés par une imprégnation du support par au moins une solution contenant au moins le ou les métaux choisis.

Ladite imprégnation peut être suivie par un séchage à une température comprise entre 70° C et 130° C et une calcination à une température comprise entre 300 et 700° C et, de préférence, entre 450 et 600° C.

Le procédé d'hydrotraitement selon l'invention peut s'appliquer notamment à l'hydrodémétallisation de charges lourdes d'hydrocarbures comme, par example, des résidus de distillation du pétrole brut, ou d'huile désasphaltée provenant du désasphaltage au solvant d'un tel résidu, et dont les caractéristiques, citées à titre non limitatif, peuvent être les suivantes:

– masse volumique à 15° C (mésurée selon la Norme AFNOR NFT 60-101): > 800 kg/m³,

– viscosité à 100° C (mesurée selon la Norme AFNOR NFT 60-100): > 10.10⁻⁶ m²/s (10 centistokes)

– résidu Conradson (mesuré selon la norme AFNOR NFT 60-116): > 0,1% en poids

– teneur en soufre (mesurée par fluorescence X): > 1% en poids

– teneur en vanadium + nickel (mesurée par fluorescence X): > 10 p.p.m.

Les conditions opératoires dans lesquelles est effectuée l'hydrodémétallisation sont des conditions usuelles telles que les suivantes:

– température comprise entre 350 et 450° C,

– pression comprise entre 50 et 200 bar,

– rapport volumique hydrogène/hydrocarbures compris entre 100 et 5000 normaux litres/litre,

– vitesse spatiale horaire de la charge (volume de liquide passant par heure sur une unité de volume de catalyseur) comprise entre 0,2 et 5.

Les exemples qui suivent sont destinés à illustrer l'invention de façon non limitative.

*Exemple 1*

Cet exemple concerne la préparation de catalyseurs selon l'invention.

On dispose d'une alumine préparée pour la Demanderesse par la Société AMERICAN CYANAMID.

Les caractéristiques de cette alumine sont données dans le Tableau I ci-après.

### Tableau I

| | |
|---|---|
| Surface en $m^2/g$ | 188 |
| Volume poreux total en $cm^3/g$ (V1+V2) | 0,986 |
| Volume poreux constitué par des pores de rayons < $100.10^{-8}$ cm en $cm^3/g$ (1)–V1 | 0,80 soit 81% du total |
| Volume poreux constitué par des pores de rayons > $100.10^{-8}$ cm en $cm^3/g$ (2)–V2: | 0.186 soit 19% du total |
| Volume poreux constitué par des pores de rayons ⩾ $1000.10^{-8}$ cm en $cm^3/g$ (3) | 0,029 soit 2,9% du total |
| Mode de distribution des rayons de pores en cm | $65.10^{-8}$ |

(1) mesuré à l'azote par la méthode BET,
(2) mesuré au porosimètre à mercure,
(3) mesuré au porosimètre à mercure.

On prepare, à partir de cette alumine, trois catalyseurs A, B et C selon l'invention.

#### Préparation du Catalyseur A

On imprègne l'alumine par une solution aqueuse d'heptamolybdate d'ammonium, la solution étant en concentration telle que le catalyseur final contienne 0,3% en poids d'oxyde de molybdène Mo $O_3$. L'imprégnation se fait par circulation de la solution d'heptamolybdate d'ammonium. Après l'imprégnation, le produit obtenu est séché pendant seize heures à 110° C, puis calciné à l'air pendant deux heures, à une température de 500° C.

On obtient ainsi le précurseur du catalyseur A contenant 0,3% en poids d'oxyde de molybdène Mo $O_3$, soit 0,2% en poids de molybdène.

#### Préparation du Catalyseur B

Le catalyseur B est préparé de la même façon que le catalyseur A, à cette différence près que la solution d'imprégnation utilisée contient de l'heptamolybdate d'ammonium et du nitrate de nickel.

Le catalyseur B obtenu contient 0,3% en poids d'oxyde de molybdène Mo $O_3$, soit 0,2% en poids de molybdène, et 0,3% en poids d'oxyde de nickel Ni O, soit 0,23% en poids de nickel.

#### Préparation du Catalyseur C

On imprègne l'alumine par une solution dans l'éthanol d'acétylacétonates de molybdène et de vanadium, la solution contenant ces sels en concentrations telles que le catalyseur final contienne 0,3% en poids d'oxyde de molybdène Mo $O_3$, soit 0,2% de molybdène, et 0,2% en poids d'oxyde de vanadium $V_2 O_5$, soit 0,1% en poids de vanadium.

Les conditions de séchage et de calcination sont les mêmes que pour la préparation des catalyseurs A et B.

#### Sulfuration des catalyseurs A, B et C

Les catalyseurs A, B et C sont sulfurés dans le réacteur qui sert aux essais d'hydrodémétallisation qui seront décrits plus loin.

On envoie sur le catalyseur du gazole contenant du diméthyldisulfure (DMDS) (à raison d'un pourcentage de DMDS de 2% en poids) à 250° C, sous une pression d'hydrogène de 30 bar, avec une vitesse spatiale horaire de 1 et un rapport volumique hydrogène/hydrocarbures de 200.

On élève la température à 300° C, on interrompt l'injection de DMDS et on élève la température à 390° C; on arrête l'injection de gazole.

Les catalyseurs A, B et C sont prêts pour les essais d'hydrodémétallisation.

#### Exemple 2

Cet exemple concerne des essais d'hydrodémétallisation à l'aide:
– de l'alumine qui a servi à préparer les catalyseurs A, B et C et sulfurée de la même façon que les catalyseurs A, B et C (voir Exemple 1); on obtient ainsi le catalyseur témoin T;
– des catalyseurs A, et B et C,

La charge est constituée par le résidu de la distillation à pression réduite d'un résidu de distillation à pression atmosphérique d'un pétrole brut d'origine «KIRKOUK».

Les caractéristiques de cette charge sont données dans le Tableau II ci-après:

### Tableau II

| | |
|---|---|
| Masse volumique à 15° C en $kg/m^3$ | 1025 |
| Viscosité à 100° C en $10^{-6}$ $m^2/s$ (centistokes) | 890 |
| Résidu Conradson en % en poids | 18 |
| Teneur en asphaltènes en % en poids | 7 |
| Teneur en soufre en % en poids | 5 |
| Teneur en vanadium en p.p.m. | 120 |
| Teneur en nickel en p.p.m. | 55 |

Les conditions des essais sont les suivantes:
– température: 390° C,
– pression d'hydrogène: 140 bar,
– rapport volumique hydrogène/charge: 700 normaux litres/litre,
– vitesse spatiale horaire: 1 v.v.h.

On détermine par analyse à intervalles de temps réguliers les pourcentages de vanadium et de nickel contenus dans les effluents. On peut ainsi tracer les courbes des pourcentages d'hydrométallisation (réduction du taux des métaux dans l'effluent par rapport à la charge) en fonction du temps.

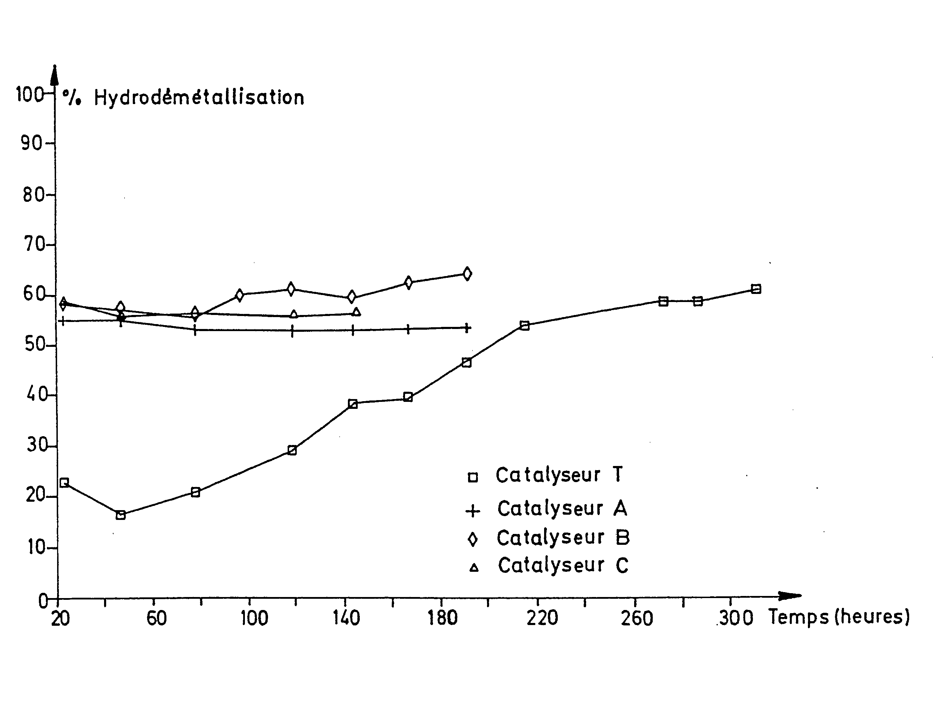

Les résultats sont reportés sur la Figure annexée.

Cette figure permet de constater que l'ajout de métaux à l'alumine réduit pratiquement à néant la période de mise en régime. Avec deux metaux, les résultats d'hydrométallisation sont meilleurs.

## Revendications

1. Procédé d'hydrotraitement et, notamment, d'hydrodémétallisation d'une charge d'hydrocarbures, consistant, dans des conditions usuelles d'hydrotraitement, à mettre ladite charge en contact avec un catalysateur comprenant un support minéral réfractaire composé essentiellement par une alumine dont les caractéristiques sont les suivantes:
- surface spécifique: supérieure à 150 m²/g et, de préférence, à 175 m²/g,
- volume poreux: supérieure à 0,6 cm³/g et, de préférence, à 0,7 cm³/g,
- distribution du volume poreux en fonction du rayon de pore: au moins 50% de pores de rayon au plus égal à 100.10⁻⁸ cm, et moins de 10% de pores de rayon supérieur ou égal à 1000.10⁻⁸ cm,
- mode de distribution des rayons de pores en cm (maximum de la courbe de distribution des rayons de pores): rayons compris entre 40 et 70.10⁻⁸ cm, ledit catalysateur ayant été sulfuré préalablement à la mise en oeuvre dudit procédé et étant éventuellement sulfuré pendant ledit procédé, ledit procédé étant caractérisé en ce que ledit catalyseur contient, sous forme libre ou combinée, outre le support, rapporté au poids total du catalyseur, de 0,01 à 0,7% en poids, calculé en élément, de molybdène.

2. Procédé selon la revendication 1, caractérisé en ce que la teneur en molybdène est comprise entre 0,2 et 0,6% en poids.

3. Procédé selon l'une des revendications 1 et 2, caractérisé en ce que le catalyseur contient en outre, lors de la mise en oeuvre du procédé, de 0,01 à 0,7% en poids de nickel.

4. Procédé selon l'une des revendications 1 et 2, caractérisé en ce que le catalyseur contient en outre, lors de la mise en oeuvre du procédé, de 0,01 à 0,7% en poids de vanadium.

5. Catalyseur d'hydrotraitement pour la mise en oeuvre du procédé selon l'une des revendications 1 à 4, ledit catalyseur comprenant un support minéral réfractaire composé essentiellement par une alumine dont les caractéristiques sont les suivantes:
- surface spécifique supérieure à 150 m²/g et, de préférence, à 175 m²/g,
- volume poreux: supérieur à 0,6 cm³/g et, de préférence, à 0,7 cm³/g,
- distribution du volume poreux en fonction du rayon de pore: au moins 50% de pores de rayon au plus égal à 100.10⁻⁸ cm, et moins de 10% de pores de rayon supérieur ou égal à 1000.10⁻⁸ cm,
- mode de distribution des rayons de pores en cm (maximum de la courbe de distribution des rayons de pores): rayons compris entre 40 et 70.10⁻⁸ cm, ledit catalyseur ayant été sulfuré préalablement à la mise en oeuvre dudit procédé et étant éventuellement sulfuré pendant ledit procédé, ledit catalyseur étant caractérisé en ce qu'il contient, sous forme libre ou combinée, outre le support, rapporté au poids total du catalyseur, de 0,01 à 0,7% en poids, calculé en élément, de molybdène.

6. Catalyseur selon la revendication 5, caractérisé en ce que la teneur en molybdène est comprise entre 0,2 et 0,6% en poids.

7. Catalyseur selon l'une des revendications 5 et 6, caractérisé en ce que le catalyseur contient en outre de 0,01 à 0,7% en poids de nickel.

8. Catalyseur selon l'une des revendications 5 et 6, caractérisé en ce que le catalyseur contient en outre de 0,01 à 0,7% en poids de vanadium.

## Patentansprüche

1. Verfahren zur Behandlung einer Kohlenwasserstoffcharge mit Wasserstoff, insbesondere zur Entmetallisierung einer Kohlenwasserstoffcharge in Gegenwart von Wasserstoff, wobei die Charge unter Bedingungen, welche bei der Behandlung mit Wasserstoff üblich sind, mit einem Katalysator in Berührung gebracht wird, welcher vor der Durchführung des Verfahrens sulfuriert worden ist sowie gegebenenfalls während des Verfahrend sulfuriert wird und einen feuerfesten mineralischen Träger aufweist, der im wesentlichen aus einer Tonerde mit den folgenden Kennwerten besteht:
- spezifische Oberfläche: grösser als 150 m²/g, vorzugsweise grösser als 175 m²/g,
- Porenvolumen: grösser als 0,6 cm³ /g, vorzugsweise grösser als 0,7 cm³/g,
- Porenvolumenverteilung in Abhängigkeit vom Porenradius: mindestens 50% aus Poren mit einem Radius von höchstens 100 . 10⁻⁸ cm sowie weniger als 10% aus Poren mit einem Radius grösser als oder gleich 1000 . 10⁻⁸ cm und
- Porenradiusverteilung in cm (Maximum der Porenradiusverteilungskurve): Radien zwischen 40 und 70 . 10⁻⁸ cm, dadurch gekennzeichnet, dass der Katalysator neben dem Träger 0,01 bis 0,7 Gew.-% freies oder gebundes Molybdän enthält, bezogen auf das Katalysatorgesamtgewicht und elementares Molybdän.

2. Verfahren nach Anspruch 1, dadurch gekennzeichnet, dass der Molybdängehalt zwischen 0,2 und 0,6 Gew.-% liegt.

3. Verfahren nach Anspruch 1 oder 2, dadurch gekennzeichnet, dass der Katalysator bei der Durchführung des Verfahrens ferner 0,01 bis 0,7 Gew.-% Nickel enthält.

4. Verfahren nach Anspruch 1 oder 2, dadurch gekennzeichnet, dass der Katalysator bei der Durchführung des Verfahrens ferner 0,01 bis 0,7 Gew.-% Vanadium enthält.

5. Katalysator zur Durchführung des Verfahrens nach einem der Ansprüche 1 bis 4, welcher vor der Durchführung des Verfahrens sulfuriert worden ist sowie gegebenenfalls während des Verfahrens sulfuriert wird und einen feuerfesten mineralischen Träger aufweist, der im wesentlichen aus einer Tonerde mit den folgenden Kennwerten besteht:
- spezifische Oberfläche: grösser als 150 m²/g, vorzugsweise grösser als 175 m²/g,
- Porenvolumen: grösser als 0,6 cm³/g, vorzugsweise grösser als 0,7 cm³/g,

– Porenvolumenverteilung in Abhängigkeit vom Porenradius: mindestens 50% aus Poren mit einem Radius von höchstens 100 . $10^{-8}$ cm sowie weniger als 10% aus Poren mit einem Radius grösser als oder gleich 1000 . $10^{-8}$ cm und

– Porenradiusverteilung in cm (Maximum der Porenradiusverteilungskurve): Radien zwischen 40 und 70 . $10^{-8}$ cm,

dadurch gekennzeichnet, dass er neben dem Träger 0,01 bis 0,7 Gew.-% freies oder gebundenes Molybdän enthält, bezogen auf das Katalysatorgesamtgewicht und elementares Molybdän.

6. Katalysator nach Anspruch 5, dadurch gekennzeichnet, dass der Molybdängehalt zwischen 0,2 und 0,6 Gew.-% liegt.

7. Katalysator nach Anspruch 5 oder 6, dadurch gekennzeichnet, dass er ferner 0,01 bis 0,7 Gew.-% Nickel enthält.

8. Katalysator nach Anspruch 5 oder 6, dadurch gekennzeichnet, dass er ferner 0,01 bis 0,7 Gew.-% Vanadium enthält.

**Claims**

1. A process for the hydrotreatment and, in particular, the hydrodemetallisation of a hydrocarbon charge, comprising, under normal hydrotreatment conditions, bringing said charge into contact with a catalyst consisting of a refractory mineral support essentially composed of an alumina having the following characteristics:

– specific surface: greater than 150 m²/g and, preferably, greater than 175 m²/g,

– pore volume: greater than 0.6 cm³/g and, preferably, greater than 0.7 cm³/g,

– pore volume distribution as a function of pore radius: at least 50% of pores with a radius at most equal to 100.$10^{-8}$ cm and less than 10% of pores with a radius greater than or equal to 1000.$10^{-8}$ cm,

– mode of pore radius distribution in cm (maximum of the pore radius distribution curve): radii comprised between 40 and 70.$10^{-8}$ cm,

said catalyst having been sulphurated before carrying out said process and being optionally sulphurated during said process,

said process being characterised in that in addition to the support said catalyst contains, in free or combined form, from 0.01 to 0.7% by weight of molybdenum, in relation to the total weight of the catalyst, calculated on the element.

2. A process according to claim 1, characterised in that the molybdenum content is between 0.2 and 0.6% weight.

3. A process according to either of claims 1 and 2, characterised in that the catalyst also contains, when the process is carried out, from 0.01 to 0.7% by weight of nickel.

4. A process according to either of claims 1 and 2, characterised in that the catalyst also contains, when the process is carried out, from 0.01 to 0.7% by weight of vanadium.

5. A hydrotreatment catalyst for carrying out the process according to any one of claims 1 to 4, said catalyst comprising a refractory mineral support essentially composed of an alumina having the following characteristics:

– specific surface: greater than 150 m²/g and, preferably, greater than 175 m²/g,

– pore volume: greater than 0.6 cm³/g and, preferably, greater than 0.7 cm³/g,

– pore volume distribution as a function of pore radius: at least 50% of pores with a radius at most equal to 100.$10^{-8}$ cm and less than 10% of pores with a radius greater than or equal to 1000.$10^{-8}$ cm,

– mode of pore radius distribution in cm (maximum of the pore radius distribution curve): radii comprised betweeen 40 and 70.$10^{-8}$ cm,

said catalyst having been sulphurated before carrying out said process and being optionally sulphurated during said process,

said catalyst being characterised in that in addition to the support said catalyst contains, in free or combined form, from 0.01 to 0.7% by weight of molybdenum, in relation to the total weight of the catalyst, calculated on the element.

6. A catalyst according to claim 5, characterised in that the molybdenum content is between 0.2 and 0.6% weight.

7. A catalyst according to either of claims 5 and 6, characterised in that the catalyst also contains from 0.01 to 0.7% by weight of nickel.

8. A catalyst according to either of claims 5 and 6, characterised in that the catalyst also contains from 0.01 to 0.7% by weight of vanadium.